# EUROPÄISCHE PATENTSCHRIFT

(11) **EP 2 837 532 B1**
(45) Veröffentlichungstag und Bekanntmachung des Hinweises auf die Patenterteilung: **28.10.2015**
(21) Anmeldenummer: 14180595.2
(22) Anmeldetag: 12.08.2014
(51) Int. Cl.: B60R 25/0215

(54) **Verriegelungsvorrichtung für eine Lenksäule eines Kraftfahrzeugs**
Locking device for a vehicle steering column
Dispositif de verrouillage pour une colonne de direction d'un véhicule

(30) Priorität: 14.08.2013 DE 102013013542
(43) Veröffentlichungstag der Anmeldung: 18.02.2015
(73) Patentinhaber: AUDI AG, 85045 Ingolstadt (DE)
(72) Erfinder: Stralkowski, Sven, 85080 Gaimersheim (DE); Hoferer, Harald, 85283 Burgstall (DE)

(56) Entgegenhaltungen:
- EP-A1- 2 077 206
- EP-A1- 2 090 478
- WO-A1-92/16395
- DE-A1-102005 037 648
- DE-B3- 10 247 803
- DE-C1- 4 436 091
- FR-A1- 2 703 641
- FR-A1- 2 963 917

## Beschreibung

Die Erfindung betrifft eine Verriegelungsvorrichtung für eine Lenksäule eines Kraftfahrzeuges gemäß der im Oberbegriff des Patentanspruches 1 angegebenen Art.

Aus der DE 10 2005 037 648 A1 ist eine Baueinheit für die Verriegelung der Lenksäule an Kraftfahrzeugen offenbart. Die an der Lenksäule montierte Baueinheit umfasst einen insbesondere elektrisch betätigbaren Sperrbolzen, der in die Lenksäule hinein- oder herausgefahren werden kann, um bei einem unberechtigten Zugriff das Lenken des Kraftfahrzeugs unmöglich zu machen. Als Nachteilig erweist sich hierbei, dass mittels einer Demontage der Baueinheit grundsätzlich eine Überwindung der Verriegelung ermöglicht ist.

Eine gattungsgemäße, sämtliche Merkmale der im Oberbegriff des Patentanspruches 1 aufweisende Verriegelungsvorrichtung für eine Lenksäule eines Kraftfahrzeugs ist in der DE 102 47 803 offenbart.

Aufgabe der Erfindung ist es, einer Verriegelungsvorrichtung für eine Lenksäule eines Kraftfahrzeugs gemäß der im Oberbegriff des Patentanspruches 1 angegebenen Art derart weiterzubilden, dass ein verbesserter Schutz gegen Manipulation bzw. Überwindung der Verriegelung gewährleistet ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise weist die Verriegelungsvorrichtung für eine Lenksäule eines Kraftfahrzeugs ein als eine Baueinheit ausgebildetes Verriegelungsmodul auf, welches an der Lenksäule befestigbar ist. Das Verriegelungsmodul seinerseits umfasst ein Gehäuse, eine elektrische Motor-/Getriebeeinheit und einen Verriegelungsbolzen. Der Verriegelungsbolzen ist mittels der elektrischen Motor-/Getriebeeinheit in eine Verriegelungs- und Entriegelungsposition überführbar. Zur Sperrung der Lenkbewegung reicht in Verriegelungsposition der Verriegelungsbolzen bereichsweise aus dem Gehäuse hinaus und steht mit der Lenksäule formschlüssig in Wirkverbindung. Zudem umfasst das Verriegelungsmodul zusätzlich einen Riegelbolzen, der in eine Verriegelungs- bzw. Entriegelungsposition überführt ist, und der in Verriegelungsposition bereichsweise aus dem Gehäuse hinausreicht. Weiterhin ist an der Lenksäule bzw. am Lenksäulengehäuse mindestens ein einen Sperrbolzen aufweisendes Übertragungsmodul fest angeordnet. In Verriegelungsposition des Riegelbolzens gelangt der Riegelbolzen mit dem Sperrbolzen in formschlüssigen Eingriff.

Erfindungsgemäß wird der Sperrbolzen mittels des Riegelbolzens in eine Sperrposition überführt, in der der Sperrbolzen formschlüssig mit der Karosserie, z.B. einem Karosseriequerträger, verbunden ist.

Die erfindungsgemäße Ausgestaltung erweist sich als besonders vorteilhaft, da nunmehr die Komponenten Lenksäule und Verriegelungsmodul über das Übertragungsmodul in formschlüssigen Eingriffs mit der Karosserie steht, so dass ein Ausbau des Verriegelungsmodul nahezu unmöglich ist. D.h. ein verbesserter Schutz gegenüber einer Manipulation ist gewährleistet.

Um eine zweiseitige formschlüssige Verbindung mit der Karosserie zu gewährleisten, ist vorzugsweise gegenüberliegend zum Übertragungsmodul an der Lenksäule ein zweites Übertragungsmodul angeordnet. Das zweite Übertragungsmodul ist entsprechend dem bereits an der Lenksäule vorhandenen Übertragungsmodul aufgebaut und weist insbesondere einen zweiten Sperrbolzen auf.

Zum Verfahren des zweiten Sperrbolzens des zweiten Übertragungsmoduls ist gemäß einer Ausführungsform im Verriegelungsmodul ein zweiter Riegelbolzen vorgesehen, der gleichzeitig mit dem bereits vorhandenen ersten Riegelbolzen in eine Verriegelungs- und Entriegelungsposition überführbar ist. In Verriegelungsposition steht der zweite Riegelbolzen mit dem zweiten Sperrbolzen des zweiten Übertragungsmoduls formschlüssig in Wirkverbindung und der zweite Sperrbolzen des zweiten Übertragungsmoduls ist mittels des zweiten Riegelbolzens in eine Sperrposition überführbar, in der der zweite Sperrbolzen formschlüssig mit einem Karosseriebauteil verbunden ist.

Gemäß einer anderen Ausführungsform ist zum Verfahren des zweiten Sperrbolzens des zweiten Übertragungsmoduls im Verriegelungsmodul ein mit dem ersten Riegelbolzen sowie dem ersten und zweiten Sperrbolzen in Wirkverbindung stehendes Koppelelement vorgesehen. In Verriegelungsposition steht der erste Riegelbolzen über das Kopplungselement mit dem ersten und dem zweiten Sperrbolzen formschlüssig in Wirkverbindung, sodass der erste und zweite Sperrbolzen mittels des Kopplungselements jeweils in eine Sperrposition überführbar sind, in der die Sperrbolzen jeweils formschlüssig mit einem Karosseriebauteil verbunden sind.

In einer bevorzugten Ausführungsform steht der Verriegelungsbolzen in Wirkverbindung mit dem/den Riegelbolzen, so dass eine mittels der elektrischen Motor-/Getriebeeinheit bewirkbare Überführung des Verriegelungsbolzens in eine Verriegelungs- bzw. Entriegelungsposition auch ein Verfahren des bzw. der Riegelbolzens in eine Verriegelungs- bzw. Entriegelungsposition bewirkt.

Vorzugsweise ist im montierten Zustand das Verriegelungsmodul von vorne unzugänglich, in Fahrtrichtung betrachtet hinter der Lenksäule angeordnet. Die "Huckepack-Anordnung" des Verriegelungsmoduls auf der Lenksäule unterhalb der Instrumentenstafel, hat den Effekt einer besonders geschützten, eine Manipulation weiter erschwerend Positionierung des Verriegelungsmoduls, da für eine Manipulation des Verriegelungsmoduls zunächst ein Ausbau der Lenksäule erforderlich wäre.

Gemäß einer besonders vorteilhaften Ausführungsform der Erfindung umfasst das Übertragungsmodul eine fest an der Lenksäule bzw. am Lenksäulengehäuse angeordnete Hülse, ein in der Hülse angeordnetes Federelement und den in der Hülse verschiebbar gelagerten Sperrbolzen. Das Federelement und der Sperrbolzen sind derart ausgebildet und zueinander angeordnet, dass in Sperrposition das Federelement eine Rückstellkraft auf den Sperrbolzen bewirkt. Dies hat den Effekt, dass bei Überführung von Verriegelungsbolzen in Entriegelungsposition mittels des Federelements eine schnelle Rückführung von Sperrbolzen und Riegelbolzen in ihre jeweilige Entriegelungsposition bewirkt wird.

Vorzugsweise ist die Hülse mittels einer Schweißverbindung an der Lenksäule bzw. am Lenksäulengehäuse fest angeordnet. Die feste Anordnung mittels einer Schweißverbindung erweist sich als vorteilhaft, da diese schnell und kostengünstig herstellbar ist und zudem nur schwer zu lösen ist.

Gemäß einer besonders vorteilhaften Ausführungsform der Erfindung greift in Verriegelungsposition der Riegelbolzen in eine am Sperrbolzen ausgebildete Nut formschlüssig ein, wobei die Nut derart ausgebildet und angeordnet ist, dass in Verriegelungsposition eine Kippbewegung von Lenksäule mit daran befestigtem Verriegelungsmodul relativ zum Sperrbolzen ermöglicht ist. Aufgrund des Vorsehens der Nut und der speziellen "bananenförmigen" Ausgestaltung der Nut, ist in besonders vorteilhafter Weise im verriegelten Zustand eine Höhenverstellung des Lenkrades ermöglicht.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird anhand des in der Zeichnung dargestellten Ausführungsbeispiels näher beschrieben.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:

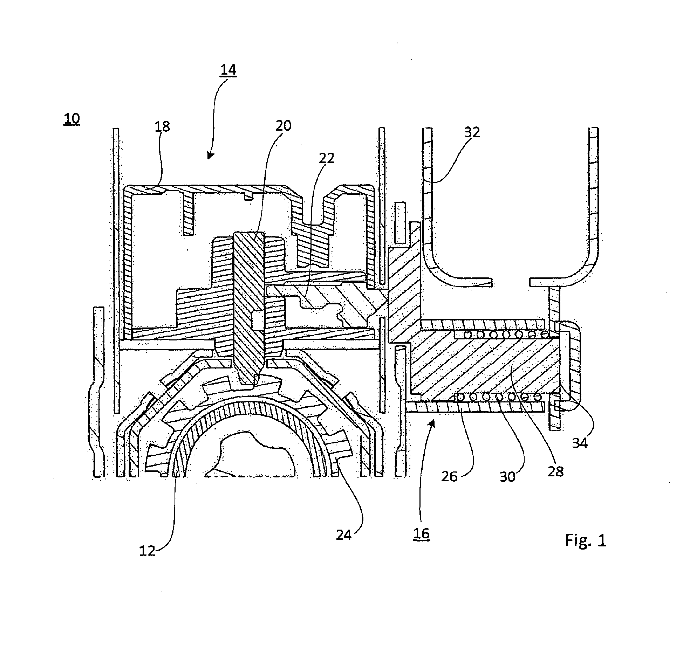

- Fig. 1: eine schematische Schnittdarstellung einer erfindungsgemäßen Verriegelungsvorrichtung für eine Lenksäule eines Kraftfahrzeugs.

Fig. 1 zeigt eine insgesamt mit der Bezugsziffer 10 bezeichnete Verriegelungsvorrichtung für eine Lenksäule 12 eines Kraftfahrzeugs.

Die Verriegelungsvorrichtung 10 umfasst ein insgesamt mit der Bezugsziffer 14 bezeichnetes Verriegelungsmodul sowie ein seitlich am Gehäuse der Lenksäule 12 befestigtes, insgesamt mit der Bezugsziffer 14 bezeichnetes Übertragungsmodul 16.

Wie Fig. 1 zu entnehmen ist, ist hierbei das Verriegelungsmodul 14 "huckepack" auf der Lenksäule 12 befestigt. D.h. im verbauten bzw. montierten Zustand ist das Verriegelungsmodul 14 unterhalb einer hier nicht dargestellten Instrumententafel angeordnet und damit aufgrund dieser Positionierung gegen Manipulation/Überwindung gut geschützt.

Das Verriegelungsmodul 14 weist eine Gehäuse 18, einen im Gehäuse 18 verschiebbar gelagerten Verriegelungsbolzen 20 sowie einen mit dem Verriegelungsbolzen 20 in Wirkverbindung stehenden, verschiebbar im Gehäuse 18 gelagerten Riegelbolzen 22 auf. Der Verriegelungsbolzen 20 ist mittels einer - hier aus Gründen der Übersichtlichkeit nicht dargestellten - elektrischen Motor-/Getriebeeinheit in eine Verriegelungs- und Entriegelungsposition überführbar.

Hierbei sind Verriegelungsbolzen 20 und Riegelbolzen 22 derart zueinander angeordnet und stehen derart miteinander in Wirkverbindung, dass in Verriegelungsposition des Verriegelungsbolzens 20 auch der Riegelbolzen 22 sich in Verriegelungsposition befindet bzw. das in Entriegelungsposition des Verriegelungsbolzens 20 auch der Riegelbolzen 22 sich in Entriegelungsposition befindet.

Wie Fig. 1 weiter zu entnehmen ist, reichen in Verriegelungsposition der Verriegelungsbolzen 20 und Riegelbolzen 22 jeweils aus dem Gehäuse 18 des Verriegelungsmoduls 14 hinaus. Während der Verriegelungsbolzen 20 dabei im formschlüssigen Eingriff mit einem auf der Lenksäule 12 angeordneten Zahnkranz 24 steht, befindet sich der Riegelbolzen 22 in Wirkverbindung dem nachfolgend näher beschriebenen Übertragungsmodul 16.

Das seitlich am Gehäuse des Lenkgetriebes 12 angeordnete Übertragungsmodul 16 umfasst eine mittels einer Schweißverbindung am Gehäuse des Lenkgetriebes 12 befestigte Hülse 26, einen in der Hülse 26 verschiebbar angeordneter Sperrbolzen 28 sowie eine Feder 30. Bei Aktivierung des Verriegelungsmoduls 14 und verfahren von Verriegelungsbolzen 20 und Riegelbolzen 22 in ihre jeweilige Verriegelungsposition greift der Riegelbolzen 22 formschlüssig in eine - in dieser Ansicht nicht sichtbaren - im Sperrbolzen 28 eingebrachte Nut ein und drückt den Sperrbolzen 28 gegen die Wirkung der Feder 30 in eine an einem Karosseriebauteil 32 ausgebildete Verriegelungskulisse 34. Vorliegend handelt es sich bei dem Karosseriebauteil um einen Karosseriequerträger.

Somit sind die Komponenten Lenkgetriebe 12 und Verriegelungsmodul 14 über das Übertragungsmodul 16 formschlüssig mit dem Karosseriequerträger 32 verbunden, so dass ein Ausbau von Lenksäule 12 bzw. Verriegelungsmodul 14 nahezu ausgeschlossen ist.

Um in Verriegelungsposition eine Höhenverstellung des Lenkrades und damit des Lenkgetriebes 12 zu ermöglichen, ist vorzugsweise die im Sperrbolzen 28 eingebrachte Nut bananenförmig ausgebildet.

### Bezugszeichenliste

- 10: Verriegelungsvorrichtung
- 12: Lenksäule
- 14: Verriegelungsmodul
- 16: Übertragungsmodul
- 18: Gehäuse des Verriegelungsmodul
- 20: Verriegelungsbolzen
- 22: Riegelbolzen
- 24: Zahnkranz
- 26: Hülse
- 28: Sperrbolzen
- 30: Feder
- 30: Karosseriebauteil
- 32: Verriegelungskulisse im Karosseriequerträger

## Patentansprüche

1. Verriegelungsvorrichtung (10) für eine Lenksäule (12) eines Kraftfahrzeugs, mit einem eine Baueinheit bildende, an der Lenksäule (12) befestigbarem Verriegelungsmodul (14), umfassend ein Gehäuse (18), eine elektrische Motor-/Getriebeeinheit und einen Verriegelungsbolzen (20), wobei der Verriegelungsbolzen (20) mittels der elektrischen Motor-/Getriebeeinheit in eine Verriegelungs- und Entriegelungsposition überführbar ist und in Verriegelungsposition der Verriegelungsbolzen (20) bereichsweise aus dem Gehäuse (18) hinausreicht und mit der Lenksäule (12) formschlüssig in Wirkverbindung steht, wobei das Verriegelungsmodul (14) einen ersten Riegelbolzen (22) umfasst, der in eine Verriegelungs- und Entriegelungsposition überführbar ist und in Verriegelungsposition aus dem Gehäuse (18) hinausreicht, und dass an der Lenksäule (12) mindestens ein einen Sperrbolzen (28) aufweisendes Übertragungsmodul (16) fest angeordnet ist, wobei in Verriegelungsposition der erste Riegelbolzen (22) mit dem Sperrbolzen (28) formschlüssig in Wirkverbindung steht, **dadurch gekennzeichnet, dass** der Sperrbolzen (28) mittels des ersten Riegelbolzens (22) in eine Sperrposition überführbar ist, in der der Sperrbolzen (28) formschlüssig mit einem Karosseriebauteil (32, 34) verbunden ist.

2. Verriegelungsvorrichtung (10) nach Anspruch 1, **dadurch gekennzeichnet, dass** gegenüberliegend zum Übertragungsmodul (16) an der Lenksäule (12) ein einen zweiten Sperrbolzen aufweisendes zweites Übertragungsmodul angeordnet ist, und dass das Verriegelungsmodul (14) einen zweiten Riegelbolzen aufweist, der gleichzeitig mit dem ersten Riegelbolzen (22) in eine Verriegelungs- und Entriegelungsposition überführbar ist, wobei in Verriegelungsposition der zweite Riegelbolzen mit dem zweiten Sperrbolzen des zweiten Übertragungsmoduls formschlüssig in Wirkverbindung steht und der zweite Sperrbolzen des zweiten Übertragungsmoduls mittels des zweiten Riegelbolzens in eine Sperrposition überführbar ist, in der der zweite Sperrbolzen formschlüssig mit einem Karosseriebauteil verbunden ist.

3. Verriegelungsvorrichtung (10) nach Anspruch 1, **dadurch gekennzeichnet, dass** gegenüberliegend zum Übertragungsmodul (16) an der Lenksäule (12) ein einen zweiten Sperrbolzen aufweisendes zweites Übertragungsmodul angeordnet ist, und dass das Verriegelungsmodul (14) ein mit dem ersten Riegelbolzen (22) sowie dem ersten und zweiten Sperrbolzen in Wirkverbindung stehendes Kopplungselement aufweist, wobei in Verriegelungsposition der erste Riegelbolzen (22) über das Kopplungselement mit dem ersten und dem zweiten Sperrbolzen formschlüssig in Wirkverbindung steht und der erste und zweite Sperrbolzen mittels des Kopplungselements jeweils in eine Sperrposition überführbar sind, in der die Sperrbolzen jeweils formschlüssig mit einem Karosseriebauteil verbunden sind.

4. Verriegelungsvorrichtung (10) nach einem der Ansprüche 1 bis 3, **dadurch gekennzeichnet, dass** der Verriegelungsbolzen (20) und der erste Riegelbolzen (22) oder der Verriegelungsbolzen (20) und der erste und zweite Riegelbolzen miteinander in Wirkverbindung stehen und eine Überführung des Verriegelungsbolzens (20) in Verriegelungs- oder Entriegelungsposition eine Überführung des ersten Riegelbolzens (22) oder des ersten und zweiten Riegelbolzens in Verriegelungs- oder Entriegelungsposition bewirkt.

5. Verriegelungsvorrichtung (10) nach einem der Ansprüche 1 bis 4, **dadurch gekennzeichnet, dass** das Verriegelungsmodul (14) in Fahrtrichtung betrachtet hinter der Lenksäule (12) angeordnet ist.

6. Verriegelungsvorrichtung (10) nach einem der vorgenannten Ansprüche, **dadurch gekennzeichnet, dass** das Übertragungsmodul (16) eine fest an der Lenksäule (12) angeordnete Hülse (26) und ein in der Hülse (26) angeordnetes Federelement (30) umfasst, wobei der Sperrbolzen (28) in der Hülse (26) verschiebbar gelagert ist und der Sperrbolzen (28) und das Federelement (30) derart ausgebildet und zueinander angeordnet sind, dass in Sperrposition das Federelement (30) eine Rückstellkraft auf den Sperrbolzen (28) bewirkt.

7. Verriegelungsvorrichtung (10) nach einem der Ansprüche 1 bis 6, **dadurch gekennzeichnet, dass** in Verriegelungsposition der Riegelbolzen (22) in eine am Sperrbolzen (28) ausgebildete Nut formschlüssig eingreift, wobei die Nut derart ausgebildet und angeordnet ist, dass in Verriegelungsposition eine Kippbewegung von Lenksäule (12) mit daran befestigten Verriegelungsmodul (14) relativ zum Sperrbolzen (28) ermöglicht ist.

8. Verriegelungsvorrichtung (10) nach Anspruch 7, **dadurch gekennzeichnet, dass** die Nut bananenförmig ausgebildet ist.

## Claims

1. Locking device (10) for a steering column (12) of a motor vehicle, comprising a locking module (14), which forms a modular unit, can be attached to the steering column (12) and comprises a housing (18), an electric motor-transmission unit and a locking pin (20), it being possible to transfer the locking pin (20) into a locking and unlocking position by means of the electric motor-transmission unit and the locking pin (20) extending out of the housing (18), at least in regions, when in the locking position and being operatively interlocked with the steering column (12), the locking module (14) comprising a first locking bolt (22) which can be transferred into a locking and unlocking position and which, when in the locking position, extends out of the housing (18), and at least one transfer module (16) which comprises a blocking pin (28) being rigidly arranged on the steering column (12), the first bolt (22) being operatively interlocked with the blocking pin (28) when in the locking position, **characterised in that** the blocking pin (28) can be transferred into a blocking position by means of the first locking bolt (22), in which position the blocking pin (28) is interlocked with a vehicle body component (32, 34).

2. Locking device (10) according to claim 1, **characterised in that** a second transfer module, which comprises a second blocking pin, is arranged opposite the transfer module (16) on the steering column (12), and **in that** the locking module (14) comprises a second locking bolt which can be transferred into a locking and unlocking position at the same time as the first locking bolt (22), the second locking bolt being operatively interlocked with the second blocking pin of the second transfer module when in the locking position and it being possible to transfer the second blocking pin of the second transfer module into a blocking position by means of the second locking bolt, in which position the second blocking pin is interlocked with a vehicle body component.

3. Locking device (10) according to claim 1, **characterised in that** a second transfer module, which comprises a second blocking pin, is arranged opposite the transfer module (16) on the steering column (12), and **in that** the locking module (14) comprises a coupling element which is operatively connected to the first locking bolt (22) and the first and second blocking pins, the first locking bolt (22) being operatively interlocked with the first and the second blocking pins by means of the coupling element when in the locking position and it being possible in each case to transfer the first and second blocking pins into a blocking position by means of the coupling element, in which position each of the blocking pins is interlocked with a vehicle body component.

4. Locking device (10) according to any of claims 1 to 3, **characterised in that** the locking pin (20) and the first locking bolt (22) or the locking pin (20) and the first and second locking bolts are operatively interconnected and transfer of the locking pin (20) into the locking or unlocking position causes a transfer of the first locking bolt (22) or the first and second bolts into the locking or unlocking position.

5. Locking device (10) according to any of claims 1 to 4, **characterised in that** the locking module (14) is arranged behind the steering column (12) when viewed in the direction of travel.

6. Locking device (10) according to any of the preceding claims, **characterised in that** the transfer module (16) comprises a sleeve (26) which is rigidly arranged on the steering column (12) and a spring element (30) which is arranged in the sleeve (26), the blocking pin (28) being displaceably mounted in the sleeve (26) and the blocking pin (28) and the spring element (30) being formed and arranged relative to one another such that, when the spring element (30) is in the blocking position, a restoring force acts on the blocking pin (28).

7. Locking device (10) according to any of claims 1 to 6, **characterised in that**, when in the locking position, the locking bolt (22) engages in an interlocking manner in a groove formed in the blocking pin (28), the groove being formed and arranged so as to allow a tilting movement of the steering column (12), having the locking module (14) attached thereto, relative to the blocking pin (28) when in the locking position.

8. Locking device (10) according to claim 7, **characterised in that** the groove is banana shaped.

## Revendications

1. Dispositif de verrouillage (10) pour une colonne de direction (12) d'un véhicule automobile, comprenant un module de verrouillage (14) formant une unité structurelle et qui peut être fixé sur la colonne de direction (12), comprenant un boîtier (18), une unité électrique de moteur et de boîte de vitesses et un axe de verrouillage (20), dans lequel l'axe de verrouillage (20) peut être transféré au moyen de l'unité électrique de moteur et boîte de vitesses en position de verrouillage et en position de déverrouillage, et, dans la position de verrouillage, l'axe de verrouillage (20) ressort par zones du boîtier (18) et coopère mécaniquement avec la colonne de direction (12), dans lequel le module de verrouillage (14) comprend un premier boulon de verrouillage (22) qui peut être transféré en position de verrouillage et en position de déverrouillage et, en position de verrouillage, ressort du boîtier (18) et au moins un module de transmission (16) présentant un boulon d'arrêt (28) est aménagé solidement sur la colonne de direction (12), dans lequel, en position de verrouillage, le premier boulon de verrouillage (22) coopère mécaniquement avec le boulon d'arrêt (28), **caractérisé en ce que** le boulon d'arrêt (28) peut être transféré au moyen du premier boulon de verrouillage (22) en position d'arrêt, dans laquelle le boulon d'arrêt (28) est relié mécaniquement à une pièce de carrosserie (32, 34).

2. Dispositif de verrouillage (10) selon la revendication 1, **caractérisé en ce que**, en regard du module de transmission (16) sur la colonne de direction (12), est aménagé un deuxième module de transmission présentant un deuxième boulon d'arrêt et **en ce que** le module de verrouillage (14) présente un second boulon de verrouillage, qui peut être transféré simultanément avec le premier boulon de verrouillage (22) en position de verrouillage et en position de déverrouillage, dans lequel, dans la position de verrouillage, le second boulon de verrouillage coopère mécaniquement avec le deuxième boulon d'arrêt du second module de transmission et le second boulon d'arrêt du second module de transmission peut être transféré au moyen du second boulon de verrouillage dans une position d'arrêt dans laquelle le second boulon d'arrêt est relié mécaniquement à une pièce de carrosserie.

3. Dispositif de verrouillage (10) selon la revendication 1, **caractérisé en ce que**, en regard du module de transmission (16) sur la colonne de direction (12), est aménagé un second module de transmission présentant un second boulon d'arrêt et le module de verrouillage (14) présente un élément de couplage coopérant avec le premier boulon de verrouillage (22) ainsi qu'avec le premier et le second boulon d'arrêt, dans lequel, dans la position de verrouillage, le premier boulon de verrouillage (22) coopère mécaniquement via l'élément de couplage avec le premier et le second boulon d'arrêt et le premier et le second boulon d'arrêt peuvent être transférés au moyen de l'élément de couplage respectivement dans une position d'arrêt dans laquelle les boulons d'arrêt sont mécaniquement reliés respectivement à une pièce de carrosserie.

4. Dispositif de verrouillage (10) selon l'une quelconque des revendications 1 à 3, **caractérisé en ce que** l'axe de verrouillage (20) et le premier boulon de verrouillage (22) ou l'axe de verrouillage (20) et le premier et le second boulon de verrouillage coopèrent l'un avec l'autre et un transfert de l'axe de verrouillage (20) en position de verrouillage ou de déverrouillage entraîne un transfert du premier boulon de verrouillage (22) ou du premier et du second boulon de verrouillage en position de verrouillage ou de déverrouillage.

5. Dispositif de verrouillage (10) selon l'une quelconque des revendications 1 à 4, **caractérisé en ce que** le module de verrouillage (14) est aménagé derrière la colonne de direction (12) en observant dans le sens de la marche.

6. Dispositif de verrouillage (10) selon l'une quelconque des revendications précédentes, **caractérisé en ce que** le module de transmission (16) comprend une douille (26) solidement aménagée sur la colonne de direction (12) et un élément élastique (30) aménagé dans la douille (26), dans lequel le boulon d'arrêt (28) est monté à coulissement dans la douille (26) et le boulon d'arrêt (28) et l'élément élastique (30) sont conformés et aménagés l'un par rapport à l'autre de sorte que, dans la position d'arrêt, l'élément élastique (30) instaure une force de rappel sur le boulon d'arrêt (28).

7. Dispositif de verrouillage (10) selon l'une quelconque des revendications 1 à 6, **caractérisé en ce que**, dans la position de verrouillage, l'axe de verrouillage (22) s'engage mécaniquement dans une rainure formée sur le boulon d'arrêt (28), dans lequel la rainure est conformée et aménagée de sorte que, dans la position de verrouillage, un déplacement de basculement de la colonne de direction (12) soit autorisé avec un module de verrouillage (14) qui lui est fixé par rapport au boulon d'arrêt (28).

8. Dispositif de verrouillage (10) selon la revendication 7, **caractérisé en ce que** la rainure se présente en forme de banane.
